# EUROPEAN PATENT APPLICATION

(11) **EP 4 730 529 A1**
(43) Date of publication of application: **22.04.2026**
(21) Application number: 25768501.6
(22) Date of filing: 11.02.2025
(51) Int. Cl.: H01M 50/258, H01M 50/242, H01M 50/211, H01M 50/178, B60L 50/64, H01M 50/553, H01M 50/317, H01M 50/383, H01M 50/271, H01M 50/59

(54) **BATTERY MODULE, AND BATTERY PACK AND VEHICLE INCLUDING SAME**

(30) Priority: 08.03.2024 KR 20240033430
(71) Applicant: LG Energy Solution, Ltd., Seoul 07335 (KR)
(72) Inventor: LEE, Jung-Hoon, Daejeon 34122 (KR); JUNG, Hye-Mi, Daejeon 34122 (KR)
(74) Representative: Plasseraud IP
(86) International application number: PCT/KR2025/001968
(87) International publication number: WO 2025/187977

(57) **Abstract**

The present disclosure relates to a battery module including: a cell assembly including a plurality of battery cells stacked in a first direction; and a module frame including a first frame and a second frame configured to be coupled to each other along a second direction horizontally orthogonal to the first direction so as to store the cell assembly.

## Description

### TECHNICAL FIELD

The present disclosure relates to a battery module, a battery pack and vehicle including the same.

This application is based on and claims priority from Korean Patent Application No. 10-2024-0033430, filed on March 08, 2024, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. When a higher output voltage is required, a battery module or battery pack may be configured by connecting a plurality of battery cells in series. In addition, a battery module or battery pack may be configured by connecting multiple battery cells in parallel to increase the charge/discharge capacity.

A common method for configuring a battery pack by connecting multiple battery cells in series/parallel is performed by preferentially configuring a battery module including at least one battery cell and then by adding other components to at least one battery module to configure a battery pack or battery rack.

In a conventional battery module, the module frame is configured as various parts, and welds may be formed to join these parts. In this case, there is a problem where productivity is lowered because the welding process for connecting multiple plates must be performed multiple times.

In addition, in a battery module where a large number of battery cells are densely packed in a narrow space, securing safety may be a very important issue when a thermal event occurs. In particular, when an event such as thermal runaway occurs in a battery cell, high-temperature gas, flame, or heat may be generated and emitted.

In this case, the pressure inside the module frame may increase due to the high-temperature venting gas or flame, and this may cause the module frame to be damaged. Moreover, if the weld is broken, external oxygen may flow into the module frame, thereby increasing the flame inside the battery module. This may lead to a fire or explosion in the battery module or battery pack. Such a fire or explosion in the battery module or battery pack may cause not only property damage but also casualties. For example, if a fire or explosion occurs in a battery pack for an electric vehicle, it may threaten the safety of users such as drivers.

### DISCLOSURE

### Technical Problem

The present disclosure is designed to solve the problems of the related art, and therefore the present disclosure is directed to providing a battery module in which the coupled state of a module frame of the battery module is stably maintained, thereby securing safety, and a battery pack and vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a cell assembly including a plurality of battery cells stacked in a first direction; and a module frame including a first frame and a second frame configured to be coupled to each other along a second direction horizontally orthogonal to the first direction so as to store the cell assembly.

The front surface of the cell assembly may be covered by the first frame, and the rear surface of the cell assembly may be covered by the second frame, and the upper surface, lower surface, and left and right surfaces of the cell assembly may be separately covered by the first frame and the second frame.

The first frame may be configured to receive a portion of the cell assembly on one side, and the second frame may be configured to be coupled to the first frame so as to receive the remainder of the cell assembly on the other side.

A venting guide direction of venting gas generated from the battery cell and the second direction may be configured to be orthogonal.

At least one of the first frame and the second frame may have a venting hole formed on an upper surface thereof to discharge venting gas generated from the battery cell.

The plurality of battery cells may be stacked face to face so that electrode leads extend outward in a front-back direction and so that a sealing portion from which the electrode leads do not extend faces upward.

The first frame and the second frame may have an open end on the inner side, respectively, and the first frame and the second frame may be configured so that the inner open ends face each other.

A weld may be formed at the inner open ends where the first frame and the second frame come into contact with each other.

The weld is configured in the form of a line that is at least partially bent.

The battery module may further include a terminal electrically connected to an electrode lead of the battery cell and configured such that at least a portion thereof protrudes outside the first frame.

The first frame may have a terminal hole through which the terminal passes.

The battery module may further include an insulating cover provided between the first frame and the terminal and configured to electrically insulate the first frame and the terminal from each other.

The insulating cover may have a through-hole through which the terminal passes to the outside.

In addition, the present disclosure is to provide a battery pack including a battery module according to the present disclosure.

In addition, the present disclosure is to provide a vehicle comprising a battery module according to the present disclosure.

### Advantageous Effects

According to one aspect of the present disclosure, it is possible to reduce manufacturing costs and time for manufacturing the battery module by minimizing the number of parts of the module frame. Accordingly, productivity can be improved and management convenience can be enhanced.

In addition, according to another aspect of the present disclosure, even if an impact or vibration occurs in the battery module, the module frame can be stably maintained without being damaged or broken. Therefore, the structural stability of the battery module may be secured.

Therefore, according to the above aspect of the present disclosure, even if a thermal event such as venting gas or flame occurs in the battery module, the venting gas or flame can be minimized from being released to the outside through a damaged portion of the module frame, thereby effectively preventing thermal runaway propagation between battery modules.

Furthermore, according to the above aspect of the present disclosure, the spread of fire due to the introduction of oxygen through the damaged portion of the module frame can be effectively prevented in the battery module. Therefore, the safety of the battery module can be secured.

In addition, according to another aspect of the present disclosure, the coupled state of the module frame may be stably maintained even when swelling of the battery cell occurs.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery module according to an embodiment of the present disclosure.
FIG. 2 is an exploded perspective view of a battery module according to an embodiment of the present disclosure.
FIG. 3 is a cross-sectional view of a battery module according to an embodiment of the present disclosure, which may be a cross-sectional view taken along line I - I' in FIG. 1.
FIG. 4 is a drawing illustrating a venting guide direction when a thermal event occurs in a battery module according to an embodiment of the present disclosure.
FIG. 5 is a drawing illustrating a weld of a battery module according to an embodiment of the present disclosure.
FIG. 6 is a top view of a battery module according to an embodiment of the present disclosure.
FIG. 7 is a top view of a battery module according to another embodiment of the present disclosure.
FIG. 8 is a drawing illustrating a module frame of a battery module separated according to another embodiment of the present disclosure.
FIG. 9 is a cross-sectional view of a battery module according to another embodiment of the present disclosure.
FIG. 10 is a front perspective view of a battery module according to an embodiment of the present disclosure.
FIG. 11 is an exploded perspective view of a battery module according to an embodiment of the present disclosure.
FIG. 12 is a front view of a battery module according to an embodiment of the present disclosure.
FIG. 13 is a schematically perspective view of a battery pack according to an embodiment of the present disclosure.
FIG. 14 is a schematically perspective view of a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

Although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, i.e., a first direction, the Y-axis direction may indicate a front-back direction perpendicular to the X-axis direction on the horizontal plane (X-Y plane), i.e., a second direction, and the Z-axis direction may indicate an up-down direction (vertical direction) perpendicular to both the X-axis direction and the Y-axis direction, i.e., a height direction of a battery cell.

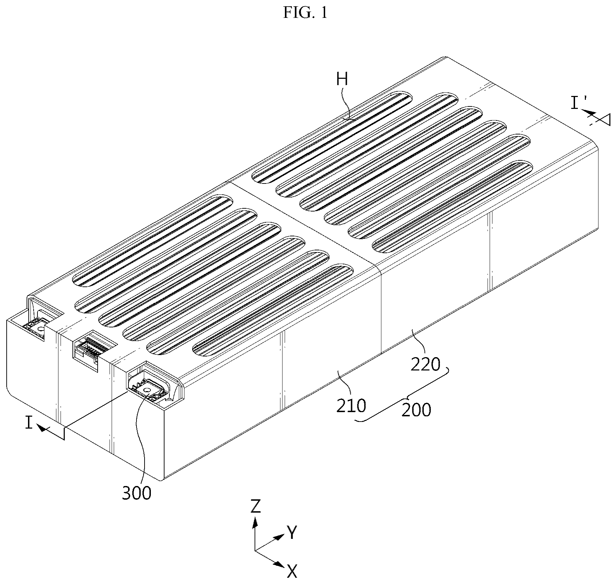

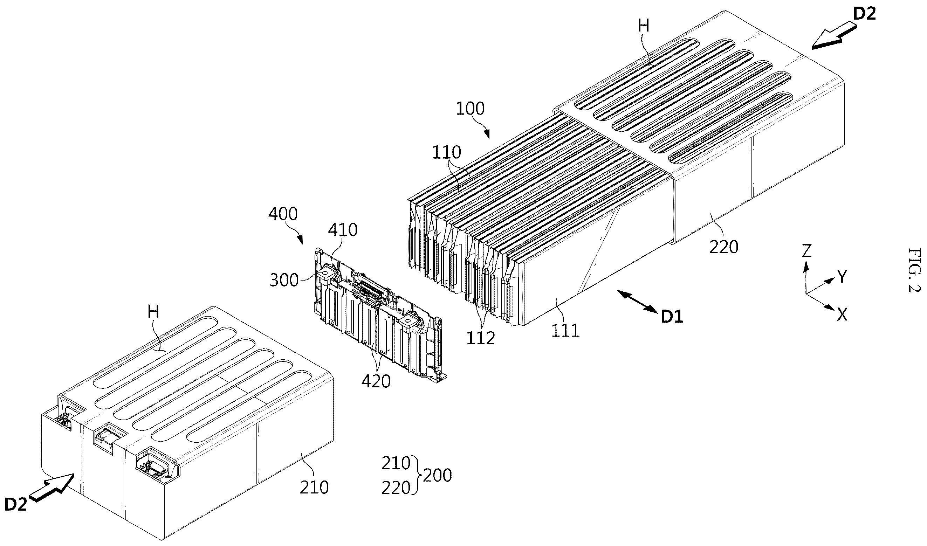

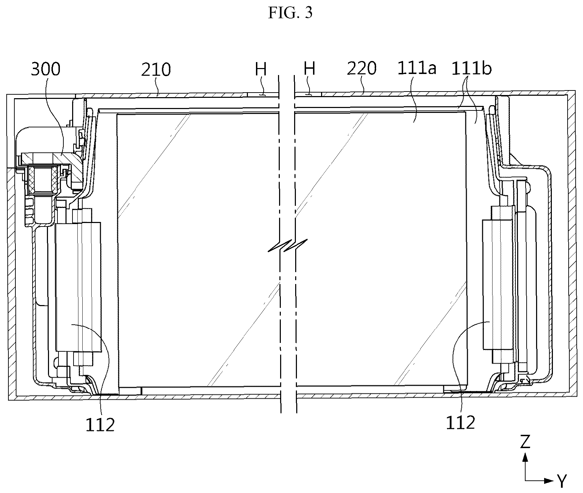

FIG. 1 is a perspective view of a battery module according to an embodiment of the present disclosure, FIG. 2 is an exploded perspective view of a battery module according to an embodiment of the present disclosure, and FIG. 3 is a cross-sectional view of a battery module according to an embodiment of the present disclosure, which may be a cross-sectional view taken along line I - I' in FIG. 1.

Referring to FIGS. 1 to 3, a battery module 10 according to the present disclosure includes a cell assembly 100 and a module frame 200.

The cell assembly 100 may include one or more battery cells 110, particularly, a plurality of battery cells 110. Here, each battery cell 110 may indicate one secondary battery, or may indicate a group of secondary batteries. In this specification, the description will be made based on the battery cell 110 representing one secondary battery.

The plurality of battery cells 110 may include an electrode assembly, a cell case 111 that stores the electrode assembly, and an electrode lead 112 that is connected to the electrode assembly and extends outside the cell case 111 to function as an electrode terminal.

In this case, the cell case 111 may be configured in various shapes, and the battery cells 110 may be classified into a pouch-type cell, a cylindrical cell, and a prismatic cell depending on the shape of the cell case 111. Since the types of battery cells 110 were widely known at the time of filing the present disclosure, a detailed description thereof will be omitted. Although the drawings of this specification show a pouch-type battery cell, the present disclosure is applicable to all types of secondary batteries known at the time of filing the present disclosure, and is not limited to a specific type of secondary battery.

In the cell assembly 100, the plurality of battery cells 110 may be configured to be stacked in the first direction. For example, the plurality of battery cells 110 may be stacked side by side in the left-right direction (±X-axis direction), as indicated by arrow D1 in FIG. 2. In addition, the plurality of battery cells 110 provided in the cell assembly 100 may be electrically connected to each other in series and/or in parallel through a bus-bar 420, which will be described later.

The module frame 200 may be configured to store the cell assembly 100. Specifically, the module frame 200 may be configured to have a storage space formed therein and store the cell assembly 100 in the storage space. For example, the module frame 200 may be configured in a cuboid shape formed by coupling several parts. The module frame 200 may be at least partially configured as metal and/or plastic materials.

Referring to FIGS. 1 to 3, the module frame 200 may include a first frame 210 and a second frame 220. The first frame 210 and the second frame 220 may be assembled to each other, forming the exterior of the module frame 200.

In this case, the first frame 210 and the second frame 220 may be coupled to each other along the second direction, which is a direction horizontally perpendicular to the first direction. For example, the second frame 220 positioned at the rear of the first frame 210 may be moved forward to be coupled to the first frame 210. That is, the first frame 210 and the second frame 220 may be coupled to each other along the front-back direction (±Y-axis direction), as indicated by arrow D2 in FIG. 2.

The first frame 210 and the second frame 220 may be configured to separately store the cell assembly 100 from each other. As a more specific example, the upper surface, lower surface, and left and right surfaces of the cell assembly 100 may be configured to be separately covered by the first frame 210 and the second frame 220.

For example, at least a portion of the cell assembly 100 may be stored in the first frame 210 or the second frame 220, and then the remaining portions may be coupled to the second frame 220 or the first frame 210, so that the cell assembly 100 may be stored inside the module frame 200. In this case, the first frame 210 and the second frame 220 may be coupled by various fastening methods such as welding, bonding, bolting, and hooking.

That is, according to the above-implemented configuration of the present disclosure, only two parts of the first frame 210 and the second frame 220 are able to configure the module frame 200 to store the entire cell assembly 100. Accordingly, the number of parts of the module frame 200 may be minimized, thereby reducing the manufacturing cost and time in manufacturing the battery module 10. Accordingly, productivity may be improved and management convenience may be enhanced.

Furthermore, according to the above-implemented configuration of the present disclosure, since the coupling area of various parts of the module frame 200 is minimized, even if an impact or vibration is applied to the battery module 10, the module frame 200 may be prevented from being damaged or broken. Therefore, the structural stability of the battery module 10 may be secured.

In particular, according to the above-implemented configuration of the present disclosure, even if a thermal event such as venting gas or flame occurs in the battery module 10, the coupled state of the module frame 200 may be stably maintained. Accordingly, the module frame 200 may be prevented from being separated and releasing the venting gas or flame to the outside. In addition, according to the above-implemented configuration of the present disclosure, it is possible to effectively prevent fire from spreading by oxygen flowing into the module frame 200 through a damaged or broken portion thereof. Therefore, the safety of the battery module may be secured.

In addition, according to the above-implemented configuration of the present disclosure, since the first frame 210 and the second frame 220 are coupled in a direction orthogonal to the direction in which the battery cell 110 swells, the coupled state of the module frame 200 may be stably maintained even when the battery cell 110 swells.

As a more specific example, the first frame 210 may be configured to receive a portion of the cell assembly 100 on one side, and the second frame 220 may be configured to be coupled to the first frame 210 and receive the remaining portion of the cell assembly 100 on the other side. For example, as disclosed in the embodiment illustrated in the drawing, the first frame 210 may be configured to receive a front portion of the cell assembly 100, and the second frame 220 may be configured to receive the remaining rear portion of the cell assembly 100.

That is, the first frame 210 may be configured to surround portions of the upper surface, lower surface, and left and right sides of the cell assembly 100 and the front surface of the cell assembly 100, and the second frame 220 may be configured to surround the remaining portions of the upper surface, lower surface, and left and right sides of the cell assembly 100 and the rear surface of the cell assembly 100. Accordingly, the front surface of the cell assembly 100 may be covered by the first frame 210, and the rear surface of the cell assembly 100 may be covered by the second frame 220.

According to the above-implemented configuration of the present disclosure, the remaining portion, excluding the area where the first frame 210 and the second frame 220 are coupled, particularly, the front and rear surfaces of the cell assembly 100, may be completely covered by the first frame 210 and the second frame 220. Therefore, when a thermal event occurs in the battery module 10, venting gas or flame may be suppressed from moving toward adjacent battery modules 10 through the front and rear surfaces of the module frame 200. Therefore, thermal runaway propagation between the battery modules 10 may be minimized.

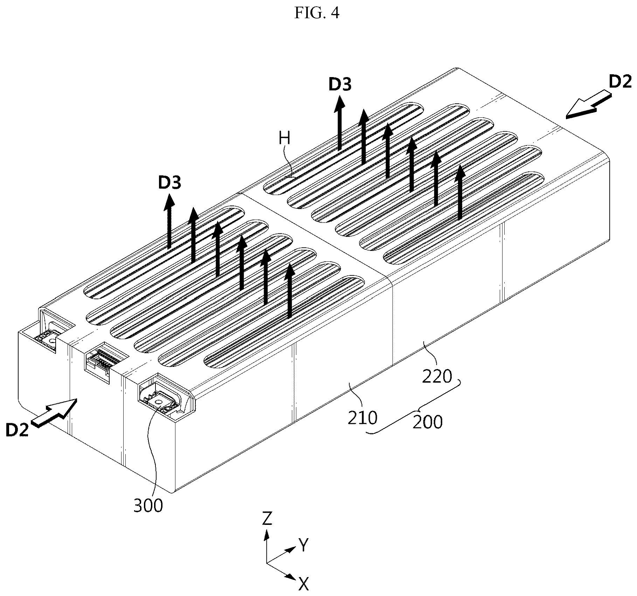

FIG. 4 is a drawing illustrating a venting guide direction when a thermal event occurs in a battery module according to an embodiment of the present disclosure.

A battery module 10 according to an embodiment of the present disclosure may be configured such that the venting guide direction of the venting gas generated in the battery cell 110 and the second direction, which is the assembly direction of the first frame 210 and the second frame 220, are orthogonal to each other. For example, as indicated by arrows D2 and D3 in FIG. 4, the first frame 210 and the second frame 220 may be assembled by moving inward along the front-back direction, and the venting guide direction may be configured as the upward direction.

According to the above-implemented configuration of the present disclosure, the area where the first frame 210 and the second frame 220 are coupled may be minimized on the side facing in the venting guide direction. That is, since the direction in which the venting gas or flame is discharged and the direction in which the first frame 210 and the second frame 220 are assembled do not match, the separation of the first frame 210 and the second frame 220 due to the pressure of the venting gas or flame may be minimized. Therefore, according to the above-implemented configuration of the present disclosure, even if a venting gas or a thermal event such as a flame occurs in the battery module 10, the coupled state of the module frame 200 may be stably maintained, so that the structural stability of the battery module 10 may be secured.

The venting guide direction will be described in more detail with reference to FIG. 4. The module frame 200 may have a venting hole H formed on at least one side. For example, the venting hole H may be formed in at least one of the first frame 210 and the second frame 220 of the module frame 200. This venting hole H may be configured to discharge the venting gas generated in the battery cell 110 to the outside of the module frame 200.

For example, the venting hole H may be formed as an opening to communicate the inside and outside of the module frame 200 with each other. However, the venting hole H may not be completely open, but may be configured to be closed in a normal state and opened depending on changes in pressure or temperature.

A plurality of venting holes H may be provided. In addition, the venting hole H may be configured to extend in one direction. For example, as indicated by arrow D2 in FIG. 4, the venting hole H may be formed to extend in a longitudinal direction (second direction) of the battery cell 110.

According to this implemented configuration of the present disclosure, it is possible to prevent the battery module 10 from exploding due to an increase in the pressure inside the battery module 10 by the venting hole H. In addition, in this case, the discharge direction of venting gas may be guided.

This venting hole H may be formed on the upper surface of the module frame 200. That is, as indicated by arrow D3 in FIG. 4, the venting guide direction of the battery module 10 may be directed upward. In addition, in this case, the coupling direction of the first frame 210 and the second frame 220 may be the front-back direction (second direction) that is orthogonal to the upward direction.

According to the above-implemented configuration of the present disclosure, when the first frame 210 and the second frame 220 are assembled in the front-back direction, since the venting guide direction is directed upward, the separation of the first frame 210 and the second frame 220 due to pressure of venting gas or flame may be minimized. Therefore, according to the above-implemented configuration of the present disclosure, even if a thermal event such as venting gas or flame occurs in the battery module 10, the coupled state of the module frame 200 may be stably maintained, thereby ensuring the structural stability of the battery module 10.

Referring back to FIG. 3, in the case where the battery cell 110 is configured as a pouch-type battery cell, the cell case 111 may be provided with a receiving portion 111a and a sealing portion 111b. The receiving portion 111a may be configured to receive an electrode assembly, and the sealing portion 111b may be configured to seal the electrode assembly by heat-fusing the edges of the receiving portion 111a. For example, one cell case 111 may be folded in the middle to store an electrode assembly therebetween, and may include a receiving portion 111a that receives the electrode assembly and a sealing portion 111b obtained by sealing three edges of the receiving portion 111a.

A pair of electrode leads 112 may be provided, and the pair of electrode leads 112 may extend outward from both ends of the battery cell 110 in the longitudinal direction (second direction). In this case, the pair of electrode leads 112 may be a positive electrode lead and a negative electrode lead. The battery cell 110 may be configured such that two electrode leads 112 are located only at one end in the second direction, for example, at the end in the +Y-axis direction as necessary.

In this case, the sealing portion 111b may include a portion from which the electrode lead 112 extends outward and a portion from which no electrode lead 112 extends outward. For example, as shown in the embodiment illustrated in FIG. 3, the portion of the sealing portion 111a from which the electrode lead 112 extends outward may be provided on both sides of the cell case 111 along the second direction (front-back direction), and the portion from which no electrode lead 112 extends outward may be provided on the upper side. That is, the plurality of battery cells 110 may be stacked face to face so that the electrode leads 112 extend outward in the front-back direction, and so that the sealing portion 111a from which no electrode lead 112 extends outward faces upward.

In this case, the venting gas generated in the battery cell 110 may be vented to the outside through the sealing portion 111a from which no electrode lead 112 extends outward. Therefore, the venting gas may be guided to vent upward. According to the above-implemented configuration of the present disclosure, the venting gas or the like vented upward from the battery cell 110 may be discharged to the outside of the battery module 10 through the venting hole H provided at the top.

According to the above-implemented configuration of the present disclosure, the venting of the battery cell 110 may be more effectively guided upward. Accordingly, in the case where the first frame 210 and the second frame 220 are assembled in the front-back direction, even if a thermal event such as a venting gas or flame occurs in the battery module 10, the separation of the first frame 210 and the second frame 220 due to the pressure of the venting gas or flame may be minimized. Therefore, the structural stability of the battery module 10 may be further secured.

Meanwhile, referring to FIG. 2 and FIG. 3, the battery module 10 of the present disclosure may further include a bus-bar frame assembly 400. The bus-bar frame assembly 400 may be provided inside the module frame 200 and configured to cover at least one side of the plurality of battery cells 110. The bus-bar frame assembly 400 may be located on the side from which the electrode leads 112 of the battery cells 110 extend outward. For example, the bus-bar frame assembly 400 may be coupled to the front and rear sides of the plurality of battery cells 110.

The bus-bar frame assembly 400 may include a bus-bar frame 410 and a plurality of bus-bars 420. The bus-bar frame 410 may be disposed to be substantially coupled to the front and rear sides of the plurality of battery cells 110. The bus-bar frame 410 may have slits through which the electrode leads of the battery cells 110 may pass in the front-back direction.

In addition, the bus-bar frame 410 may be formed of a material having electrical insulation, such as a plastic material, and configured such that the bus-bar 420 may be attached to the outer surface.

The plurality of bus-bars 420 may be formed of a metal material, such as copper, aluminum, nickel, or the like as a means for connecting the battery cells 110 in series and/or in parallel, and may be configured in a rod shape.

The electrode leads 112 of the battery cells 110 may pass through the slits of the bus-bar frame 410 and extend outside the bus-bar frame 410, and the extending portion may be attached to the surface of the bus-bar 420 by welding or the like.

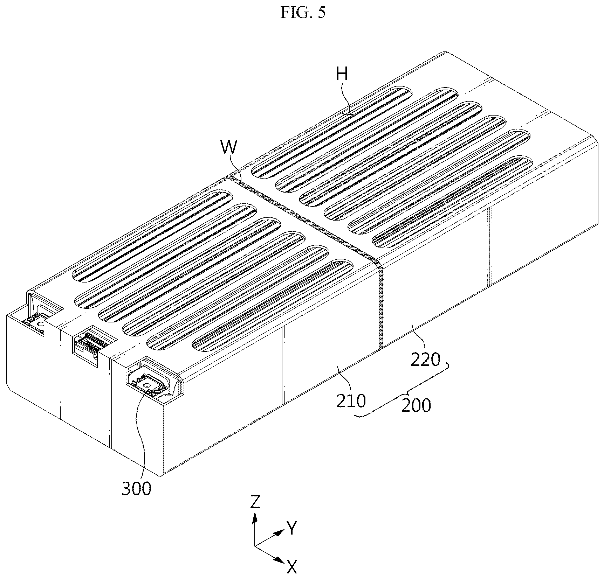

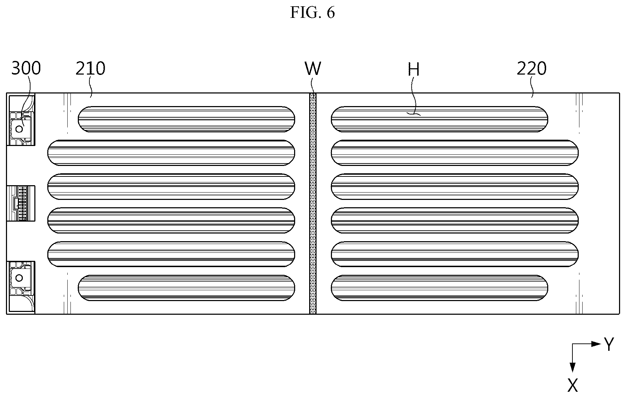

The coupled structure of the first frame 210 and the second frame 220 will be described in detail with reference to FIGS. 5 and 6.

FIG. 5 is a drawing illustrating a weld of a battery module according to an embodiment of the present disclosure, and FIG. 6 is a drawing of a battery module viewed from above according to an embodiment of the present disclosure.

Referring to FIG. 5 and FIG. 6, each of the first frame 210 and the second frame 220 may have an open end on the inner side. When the first frame 210 and the second frame 220 are coupled, the first frame 210 and the second frame 220 may be configured so that their respective inner open ends face each other.

In this case, a weld W may be formed at the inner open ends where the first frame 210 and the second frame 220 come into contact with each other. The weld W may be formed at the center of the module frame 200.

Specifically, the first frame 210 and the second frame 220 may be configured so that one supports the other. The first frame 210 and the second frame 220 may be configured so that their ends are in contact with each other. In addition, the contact portions of the first frame 210 and the second frame 220 may be welded to form a weld W.

As a more specific example, each of the first frame 210 and the second frame 220 may be configured to have four edges. For example, in the embodiment of FIG. 5, the first frame 210 located at the front may be configured to have a substantially square shape when viewed from the rear side. Similarly, the second frame 220 may be configured to have a substantially square shape when viewed from the front side. Therefore, the first frame 210 and the second frame 220 may be configured to have four edges, i.e., upper, lower, left, and right edges.

In this configuration, the first frame 210 and the second frame 220 may have a weld W formed on at least one of the four edges. In particular, the first frame 210 and the second frame 220 may have a weld W formed at a portion where the four edges come into contact with each other. That is, the weld W may be formed at all of the upper, lower, left, and right edges where the inner open ends of the first frame 210 and the second frame 220 come into contact with each other.

According to the above-implemented configuration of the present disclosure, the first frame 210 and the second frame 220 may be more stably coupled. In addition, in this case, the release of venting gas or flame may be more effectively prevented between the first frame 210 and the second frame 220.

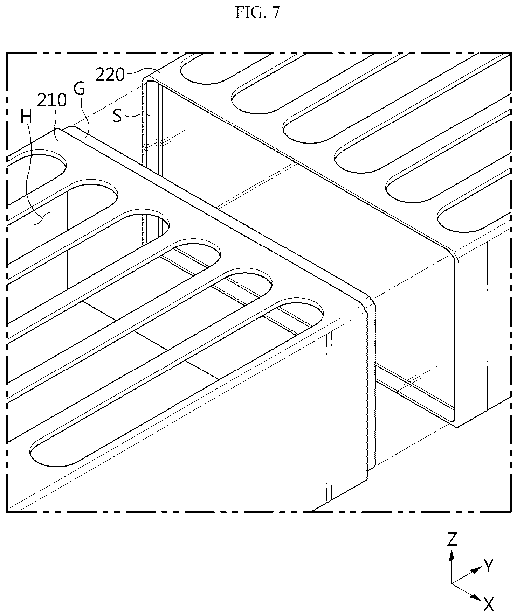

FIG. 7 is a drawing of a battery module viewed from above according to another embodiment of the present disclosure.

The weld W may be configured in various forms, in addition to the above-described embodiment. For example, the weld W may be configured in the form of a line that is at least partially bent. In particular, the weld W may be formed in a zigzag shape. That is, in the embodiment in FIG. 7, on one surface (upper surface) of the battery module 10, the weld W may be formed in a zigzag shape such that the weld W protrudes forward and backward from the center (inner side) of the battery module 10.

As a more specific embodiment, referring to FIG. 7, the first frame 210 may have a first protrusion P1. In addition, the second frame 220 may have a second protrusion P2. These protrusions P1 and P2 may be formed to protrude in the coupling direction of the first frame 210 and the second frame 220, that is, in the inward direction of the module frame 200. That is, the inner end of the first frame 210 and the inner end of the second frame 220 may be configured to have convex and concave portions. In this case, the first protrusion P1 and the second protrusion P2 may be configured to be staggered along the left-right direction (first direction).

According to the this implemented configuration of the present disclosure, the length of the weld W may be formed long. That is, referring to the embodiment in FIG. 7, the length of the weld W may be formed longer than the left-right width of the module frame 200. Therefore, the bonding strength of the weld W may be further improved, thereby firmly fixing the first frame 210 and the second frame 220 to each other.

In particular, in the case of the above-implemented configuration, since the weld W is distributed over a wide area in the coupling direction of the first frame 210 and the second frame 220, the tensile stress of the coupling portion between the first frame 210 and the second frame 220 may be improved.

Furthermore, according to the above-implemented configuration of the present disclosure, fitting joint between the first frame 210 and the second frame 220 may be implemented, so that the fixing force between them may be further improved. In addition, the sealing performance of the weld W may be further improved.

The weld W in the form of a bent line illustrated in FIG. 7 may be provided not only on the upper surface of the module frame 200, but also on the side surface or the lower surface. In addition, unlike the embodiment in FIG. 7, the weld W between the first frame 210 and the second frame 220 according to the present disclosure may be formed in various other shapes.

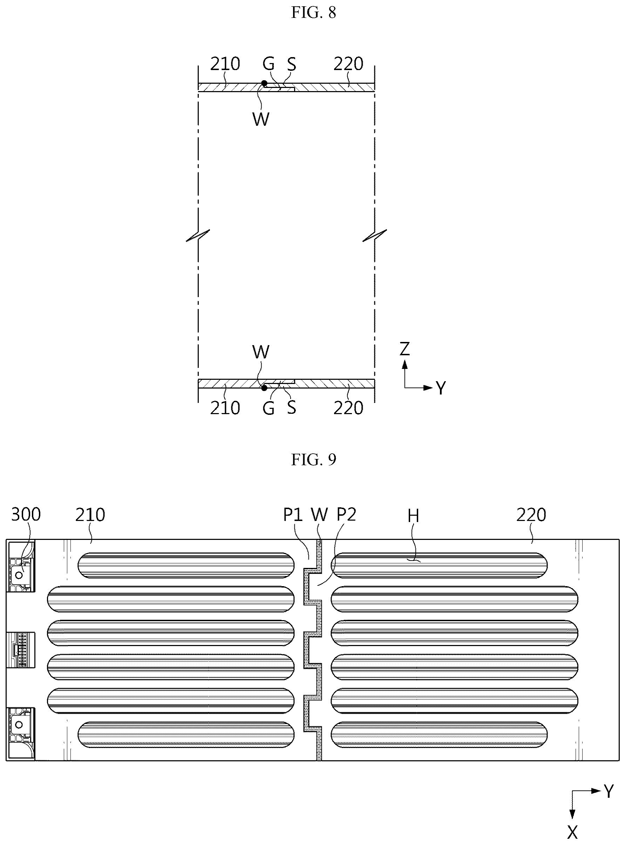

FIG. 8 is a drawing illustrating a module frame of a battery module separated according to another embodiment of the present disclosure, and FIG. 9 is a cross-sectional view of a battery module according to another embodiment of the present disclosure.

The first frame 210 and the second frame 220 may be configured so that one supports the other in an outward direction. Specifically, one of the first frame 210 and the second frame 220 may be configured to be seated on the other. That is, referring to the cross-section of the module frame 200 when viewed from the side, the inner open end of the first frame 210 and the inner open end of the second frame 220 may be configured to be staggered in the vertical direction.

For example, as shown in the embodiment illustrated in FIG. 9, the front end of the second frame 220 may be configured to be seated on the first frame 210. Specifically, the rear end of the first frame 210 may have a concave portion G formed to protrude rearward (in the +Y-axis direction). The concave portion G may be configured to be recessed inward from the rear end of the first frame 210. In addition, a mounting portion S may be formed at the front end of the second frame 220 so as to protrude forward (in the -Y-axis direction) and to be seated on the concave portion G of the first frame 210. The mounting portion S may be configured to correspond to the length of the concave portion G.

In this case, the weld W may be formed at a portion where the first frame 210 and the second frame 220 support each other in the front-back direction. That is, the weld W may be formed at a point where the outermost portion of the mounting portion S of the second frame 220 comes into contact with the concave portion G of the first frame 210.

According to this configuration of the present disclosure, since one component (e.g., the first frame 210) of the module frame 200 supports the remaining component (e.g., the second frame 220) upward (in the outward direction), the contact state between the first frame 210 and the second frame 220 may be stably maintained during the welding process. Therefore, welding performance may be improved.

In addition, according to the above-implemented configuration of the present disclosure, since the concave portion G is provided, it is possible to prevent the battery cells 110 stored inside the module frame 200 from being damaged during the welding process.

Furthermore, the support configuration (concave portion G) of the first frame 210 and the second frame 220 may be provided on the entire edge of the first frame 210 or the second frame 220, such as all of the upper, lower, left, and right edges. In this case, since the concave portion G is inserted into another component, an insertion fastening between the first frame 210 and the second frame 220 may be implemented. Therefore, the mechanical bonding strength or assembly property between the first frame 210 and the second frame 220 may be improved.

Although FIGS. 8 and 9 show an embodiment in which the concave portion G is provided in the first frame 210 and the mounting portion S is provided in the second frame 220, the concave portion G, unlike the above embodiment, may be provided in the second frame 220 and the mounting portion S may be provided in the first frame 210.

In addition, in the above embodiment, the concave portion G, the mounting portion S, and the weld W may be configured in various shapes, such as a partially bent line, in addition to the straight line illustrated in FIG. 8.

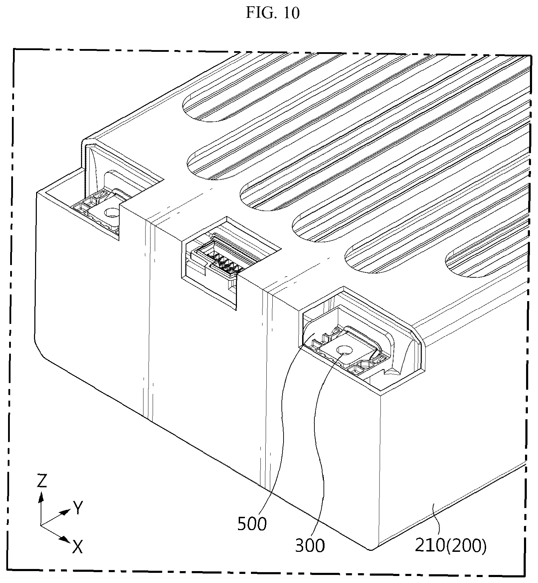

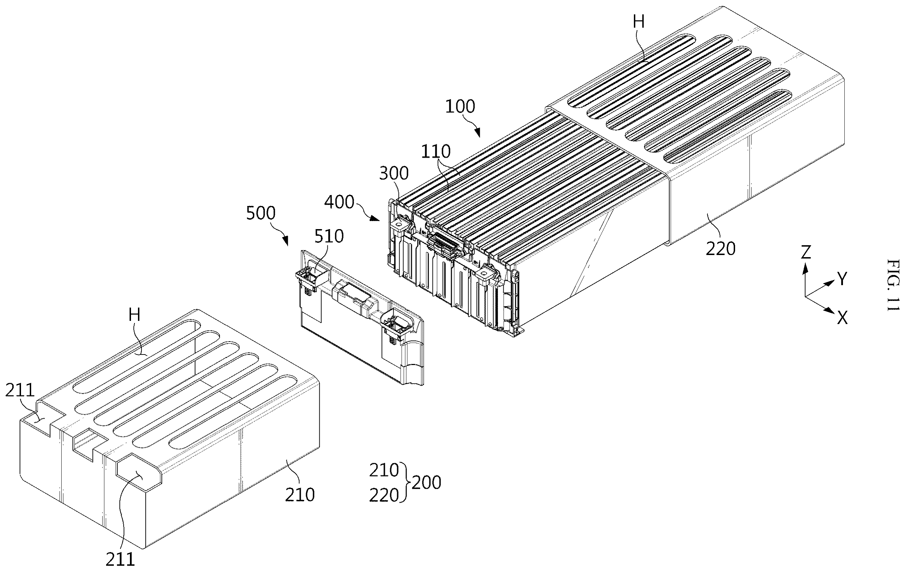

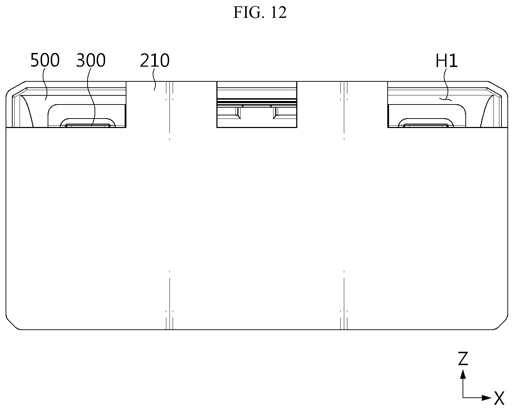

FIG. 10 is a front perspective view of a battery module according to an embodiment of the present disclosure, FIG. 11 is an exploded perspective view of a battery module according to an embodiment of the present disclosure, and FIG. 12 is a front view of a battery module according to an embodiment of the present disclosure.

Referring to FIGS. 10 to 12, a battery module 10 according to an embodiment of the present disclosure may further include a terminal 300. The terminal 300 may be configured to be electrically connected to the electrode lead 112 of the battery cell 110. The terminal 300 may include a positive electrode terminal and a negative electrode terminal. In addition, the terminal 300 may be configured to be electrically or communicatively connected to a control device such as a BMS.

The terminal 300 may be provided on a side from which the electrode lead 112 of the battery cell 110 extends outward. For example, the terminal 300 may be provided on the front side of the module frame 200. The terminal 300 may be provided in the bus-bar frame 410. The terminal 300 may be two bus-bars 420 provided on the outermost side, among a plurality of bus-bars 420.

The first frame 210 may be configured to at least partially cover the terminal 300. According to the above-implemented configuration of the present disclosure, the first frame 210 is configured to protect the terminal 300, thereby minimizing the high-temperature venting gas or flame from heading toward the terminal 300 of the battery module 10 in the event of an abnormal situation of an adjacent battery module 10.

In addition, the terminal 300 may be configured to protrude at least partially to the outside of the first frame 210. More specifically, the first frame 210 may have a terminal hole 211 configured to allow the terminal 300 to pass therethrough. The terminal hole 211 may be provided to perforating at least a portion of the upper surface, the front surface, the left surface, and the right surface of the first frame 210. Two terminals 300 may be provided, and terminal holes 211 may be provided on both left and right sides of the first frame 210.

The battery module 10 according to an embodiment of the present disclosure may further include an insulating cover 500. The insulating cover 500 may be configured to electrically insulate the module frame 200 and the bus-bar 420 or electrode lead 112 from each other. For example, the first frame 210 may be made of a metal material such as aluminum, and the insulating cover 500 may be made of plastic.

In particular, the insulating cover 500 may be configured to electrically insulate the first frame 210 and the terminal 300 from each other. The insulating cover 500 may be configured to surround the outer side of the portion where the terminal 300 is exposed to the outside.

Referring to FIG. 11, the insulating cover 500 may have a through-hole 510. The through-hole 510 may be configured to allow the terminal 300 to pass through the same to the outside. The through-hole 510 may be provided at a position corresponding to the terminal hole 211. Accordingly, the terminal 300 may be configured to be at least partially exposed to the outside through the terminal hole 211 and the through-hole 510.

The insulating cover 500 may be provided inside the module frame 500, particularly, inside the first frame 210. That is, the insulating cover 500 may be provided between the first frame 210 and the terminal 300. Specifically, the insulating cover 500 may be inserted into the first frame 210 and assembled to the cell assembly 100 and the bus-bar frame assembly 400 with the first frame 210.

As the insulating cover 500 is inserted between the first frame 210, and the cell assembly 100 and the bus-bar frame assembly 400 as shown in the above-mentioned embodiment of the present disclosure, the assembling efficiency may be secured compared to the conventional battery module in which the end plate forming the front and rear sides of the module frame has an insulating cover on the inner side so that the insulating cover and the end plate are welded to the cell assembly.

In addition, according to the above-mentioned embodiment configuration of the present disclosure, the possibility of the insulating cover 500 being separated when the internal pressure of the battery module 10 increases may be minimized, so that electrical insulation and structural stability may be secured.

Furthermore, according to the above-implemented configuration of the present disclosure, separation of the cell assembly 100 and the insulating cover 500 by venting gas or flame may be suppressed, and thus venting gas or flame may be prevented from being discharged toward the front of the battery module 10. Therefore, thermal runaway propagation between the battery modules 10 may be prevented.

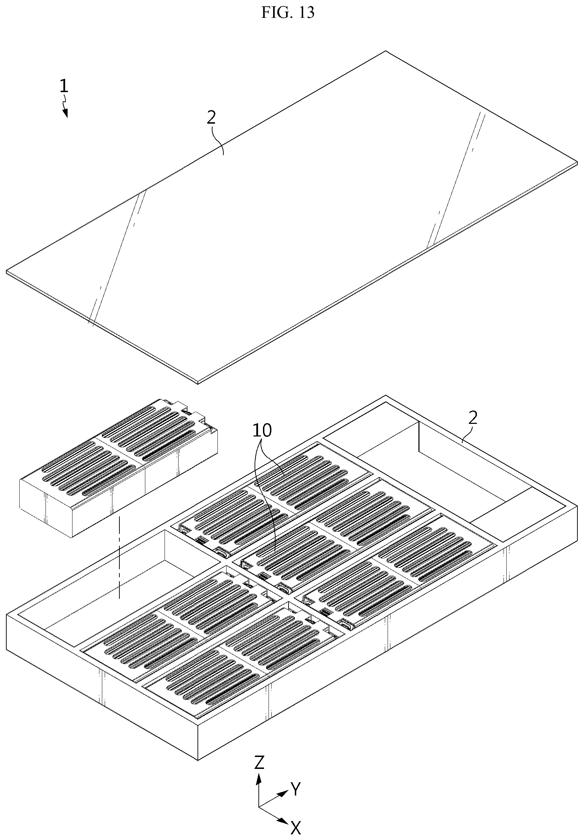

FIG. 13 is a schematically perspective view of a battery pack according to an embodiment of the present disclosure.

Referring to FIG. 13, the battery pack 1 according to an embodiment of the present disclosure may include one or more battery modules 10 according to an embodiment of the present disclosure as described above. In addition, the battery pack 1 according to an embodiment of the present disclosure may further include a pack case 2. The pack case 2 may be configured to store a plurality of battery modules 10. The pack case 2 may be as a cuboid box.

In addition, although not shown in the drawing, the pack case 2 may be configured to store components, such as a BMS (Battery Management System), a current sensor, and a fuse, for integrated control of charging and discharging of one or more battery cells 110 therein.

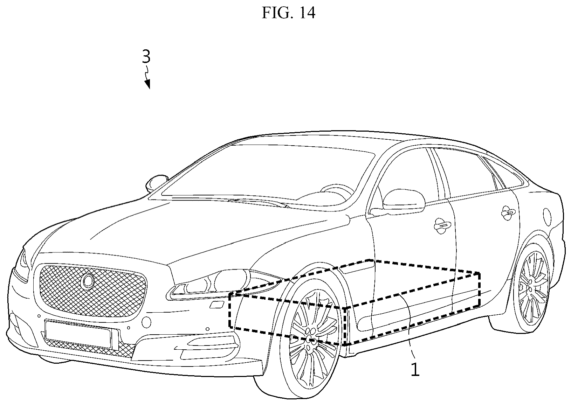

FIG. 14 is a schematically perspective view of a vehicle according to an embodiment of the present disclosure.

Referring to FIG. 14, the vehicle 3 according to an embodiment of the present disclosure may include one or more battery packs 1 according to an embodiment of the present disclosure. The vehicle 3 according to the present disclosure may be, for example, an electric vehicle, a hybrid vehicle, or a plug-in hybrid vehicle. The vehicle 3 may include a four-wheel vehicle and a two-wheel vehicle. The vehicle 3 may be operated by power supplied from the battery pack 1 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module comprising:
a cell assembly comprising a plurality of battery cells stacked in a first direction; and
a module frame comprising a first frame and a second frame configured to be coupled to each other along a second direction horizontally orthogonal to the first direction so as to store the cell assembly.

2. The battery module according to claim 1,
wherein a front surface of the cell assembly is covered by the first frame,
wherein a rear surface of the cell assembly is covered by the second frame, and
wherein an upper surface, lower surface, and left and right surfaces of the cell assembly are separately covered by the first frame and the second frame.

3. The battery module according to claim 1,
wherein the first frame is configured to receive a portion of the cell assembly on one side, and
wherein the second frame is configured to be coupled to the first frame so as to receive the remainder of the cell assembly on the other side.

4. The battery module according to claim 1,
wherein a venting guide direction of venting gas generated from the battery cell and the second direction are configured to be orthogonal.

5. The battery module according to claim 1,
wherein at least one of the first frame and the second frame has a venting hole formed on an upper surface thereof to discharge venting gas generated from the battery cell.

6. The battery module according to claim 1,
wherein the plurality of battery cells are stacked face to face so that electrode leads extend outward in a front-back direction and so that a sealing portion from which the electrode leads do not extend faces upward.

7. The battery module according to claim 1,
wherein the first frame and the second frame have an open end on the inner side, respectively, and
wherein the first frame and the second frame are configured so that the inner open ends face each other.

8. The battery module according to claim 1,
wherein a weld is formed at the inner open ends where the first frame and the second frame come into contact with each other.

9. The battery module according to claim 8,
wherein the weld is configured in the form of a line that is at least partially bent.

10. The battery module according to claim 1,
further comprising a terminal electrically connected to an electrode lead of the battery cell and configured such that at least a portion thereof protrudes outside the first frame.

11. The battery module according to claim 10,
wherein the first frame has a terminal hole through which the terminal passes.

12. The battery module according to claim 11,
further comprising an insulating cover provided between the first frame and the terminal and configured to electrically insulate the first frame and the terminal from each other.

13. The battery module according to claim 12,
wherein the insulating cover has a through-hole through which the terminal passes to the outside.

14. A battery pack comprising a battery module according to any one of claims 1 to 13.

15. A vehicle comprising a battery module according to any one of claims 1 to 13.
